# EUROPEAN PATENT SPECIFICATION

(11) **EP 1 382 793 B1**
(45) Date of publication and mention of the grant of the patent: **06.09.2006**
(21) Application number: 02291834.6
(22) Date of filing: 19.07.2002
(51) Int. Cl.: E21B 17/042, F16L 15/00

(54) **Tube having thread orientation marks**
Rohr mit Gewindeorientierungsmarkierungen
Tube avec des marques pour l'orientation du filetage

(43) Date of publication of application: 21.01.2004
(73) Proprietor: Services Pétroliers Schlumberger, 75007 Paris (FR)
(72) Inventor: Rioufol, Emmanuel, P.O. Box 1590, Rosharon, TX 77583-1590 (US); Teixeira, José, 92370 Chaville (FR)
(74) Representative: Weihs, Bruno Konrad

(56) References cited:
- EP-A- 0 139 565
- JP-A- 2001 193 086
- US-A- 4 659 119
- US-B1- 6 363 598

## Description

### Field of the invention

The present invention relates to tube elements which may be mounted between each other using threads. More particularly the invention relates to a marking of tube elements used for manufacturing threads onto the tube, and for orienting tubes relatively to each other.

### Background of the invention

A tubular assembly may comprise a plurality of tube elements which are connected to each other. Tubular assemblies may be used for example in the oil and gas industry. Generally a tubular assembly is used for penetrating a hole when drilling a well hole or during production phase when oil or gas are extracted from a well. The length of a tubular assembly is varied by connecting or disconnecting tube elements to or from the assembly.

Tube elements may be elongated tubes, short tubes or other elements with various shapes generally having a tube like opening. For reasons of simplicity tube elements will be designated by the term tube in the following description.

One way of connecting tubes is to machine a female and a male thread respectively at extremities of 2 tubes to be assembled, and to assemble by screwing or unscrewing one extremity to the other extremity. Any suitable tubes having either male or female threads only, or having two different threads may be connected in combination between other. For example a combination of two tubes each having male threads only may be connected by a tube having female threads only.

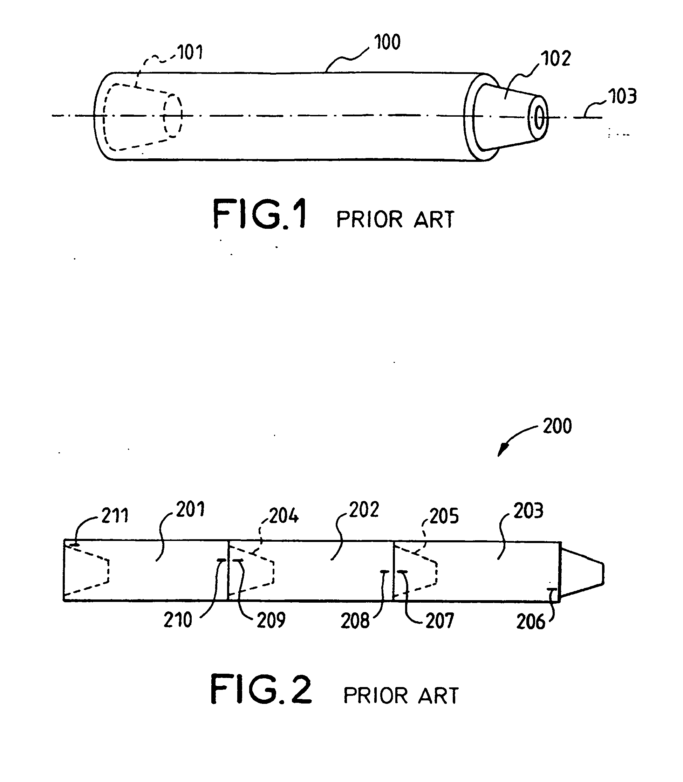

Fig. 1 shows an example of a tube 100 having at its extremities a female 101 and a male 102 thread machined on its wall along an axial direction corresponding to a centre axis 103 of the tube.

Fig. 2 schematically illustrates an example of a tube assembly 200 in which tubes 201, 202 and 203 are connected to each other by means of conical threads 204 and 205. Such an example is illustrated in US-A-6.363.598. It is known to mark the tube 201, 202 and 203 with reference marks 206 - 211 which are used during the assembly when the tubes are screwed to each other. The reference marks must eventually correspond between each other from one tube to the next tube, i.e. tubes 202 and 203 must be screwed until the male thread of tube 202 has completely entered into the female thread of tube 203, and a final torque is applied to the rotation of the tubes in order that the reference marks 207 and 208 are positioned facing each other.

The reference marks are generally generated at manufacturing of the threads. The threads are manufactured on each tube 202 and 203 and the assembly of the tubes is tested by screwing the threads. It may happen that adjustments need to be machined to the threads in order to achieve a desired fitting of tube 202 relative to tube 203. Once the manufacturing and the machining for adjustments have been completed, reference marks 208 and 207 are generated on the respective extremities of the tubes. The tubes are then disassembled for later use. The reference marks allow to find the right positioning of one tube relatively to the other at the time when they are assembled again.

The reference marks may for example be achieved by carving a surface of a tube wall. Any other way of achieving reference marks may also be used.

The described example of generating reference marks requires that the tubes 201, 202 and 203 be assembled in a same order as when the thread were machined, since changing the order of the tubes would make the reference marks useless for obvious reasons. Each thread on one tube extremity is specifically machined and marked to fit and match a thread on the extremity of another determined tube to be connected.

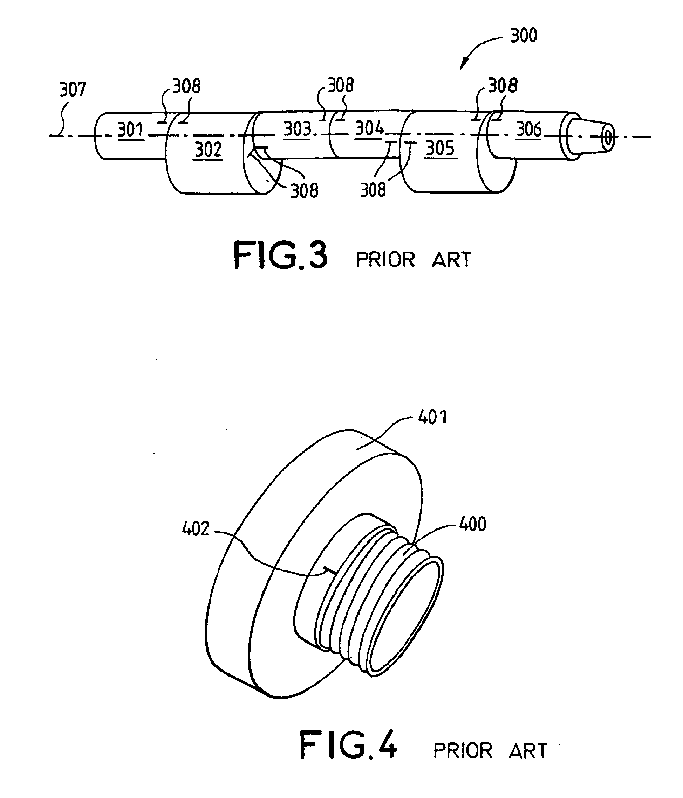

Another example of a tube assembly 300 is shown in Fig. 3. The tube assembly 300 comprises cylindrical tubes 301, 303, 304 and 306 and tubes 302 and 305 which are assembled eccentered to a centre axis 307 of the tube assembly 300. A specific shape and orientation of the tubes 302 and 305 may be caused for example by equipment to be included in the tubes or any other reason. Reference marks 308 have been generated at the manufacturing of threads on the tubes. The threads have been machined in such a way that a determined orientation of the tubes relatively to each other as showed in the figure is achieved. The reference marks 308 are particularly useful when reassembling the tubes because they allow to obtain the desired relative orientation by simply making the reference marks correspond from one tube to the next tube.

Fig. 4 shows an example of a male thread machined on an extremity of a tube 401. It is known to indicate by a thread mark 402 a precise localisation of the thread at which the thread ends (or begins). This is generally done at manufacturing of the thread. In fact the thread mark may be generated either after having machined the thread or prior to machining the thread. In the latter case it is possible to precisely specify at which mark the thread will end (or begin) before the thread is actually machined in the wall of the tube.

The end of a female thread generally corresponds to the end of a male thread that would be connected by positioning in the female thread.

### Summary of the invention

In a first aspect the invention provides a tube having a first and a second thread orientation mark at respectively a first and a second extremity. The marks are each used for orienting a thread machined in an axial direction of the tube. The first and the second mark are positioned relatively to each other such that a half line perpendicular to the centre axis, departing from the centre axis and passing through the first mark, when translated in a motion parallel to the centre axis towards the second extremity, at the second extremity departs from the centre axis and passes through the second mark.

Preferably the first or second thread orientation marks are used to adjust a further tube connected to respectively the first or second extremity, the further tube having a thread orientation mark which is positioned to correspond to the first or second thread orientation mark when the tubes are connected.

In a second aspect the invention provides a method for marking a first orientation mark and a second orientation mark on a tube at respectively a first extremity and a second extremity of the tube. The first orientation mark and the second orientation mark are used for orienting threads machined in a axial direction of the tube. The method comprises
■ marking the tube at the first extremity with a first orientation mark,
■ determining a half line perpendicular to a centre axis of the tube, departing from the centre axis at the first extremity and passing through the first mark,
■ translating the half line from the first extremity to the second extremity in a motion parallel to the centre axis, and
■ marking the second orientation mark at an intersection of the translated half line and a wall of the tube.

In a third aspect the invention provides a method for marking a first orientation mark and a second orientation mark on a tube respectively at a first extremity and a second extremity of the tube, the first orientation mark and the second orientation mark being used for orienting threads machined in an axial direction of the tube. The method comprises
■ marking the tube at the first extremity with the first orientation mark,
■ determining an azimuthal angle of the first orientation mark with respect to a reference line perpendicularly intersecting a centre axis of the tube at the first extremity,
■ translating the reference line from the first extremity to the second extremity in a motion parallel to the centre axis, and
■ marking the second orientation mark at the second extremity at a position located on a wall of the tube at the azimuthal angle with respect to the translated reference line.

In a preferred embodiment the method comprises putting the tube on a support.

In a fourth aspect the invention provides a method for marking a first orientation mark and a second orientation mark on a tube respectively at a first extremity and a second extremity of the tube, the first orientation mark and the second orientation mark being used for orienting threads machined in an axial direction of the tube. The method comprises
■ fixing the tube on a support,
■ measuring a first outside diameter of the tube at the first extremity in a vertical direction,
■ marking the first orientation mark at the first extremity at a location having a vertical position corresponding to a selected fraction of the first outside diameter from a maximum height of the tube at the first extremity,
■ measuring a second outside diameter of the tube at the second extremity in the vertical direction,
■ marking the second orientation mark at the second extremity at a location having a vertical position corresponding to the selected fraction of the second outside diameter from a maximum height of the tube at the second extremity.

In a further preferred embodiment the selected fraction is one half.

In a fifth aspect the invention provides a tube assembly comprising a plurality of tubes, in which the tubes are connected at their extremities by mounting the respective threads to each other and making the first thread orientation mark of one tube correspond with the second thread orientation mark of an adjacent tube.

### Brief description of the drawings

The invention will now be described in greater detail with reference to the accompanying drawings, in which :
Figure 1 shows a tube as known from prior art ;
Figure 2 shows a tube assembly of tubes carrying reference marks as known from prior art ;
Figure 3 shows a tube assembly as known from prior art ;
Figure 4 shows a male thread as known from prior art ;
Figure 5 shows an example of a tube with thread orientation marks according to the invention ;
Figure 6 contains a schematic explanation of an example of how to obtain a thread orientation mark according to the invention ;
Figure 7 shows an example of a tube according to the invention with an oriented thread ;
Figure 8 shows an example of a tube assembly of tubes according to the invention ;
Figure 9A and 9B show examples of tube extremities having a different diameter ;
Figure 10 contains a representation of an example of a bent tube centre axis with half lines departing there from ;
Figure 11 illustrates an example of a method for obtaining thread orientation marks according to the invention ;
Figure 12 illustrates an example of a method for orienting a tube in order to obtain a thread orientation mark according to the invention.

### Description of preferred embodiments

All through the description, same reference marks to the drawings will be used to designate the same items.

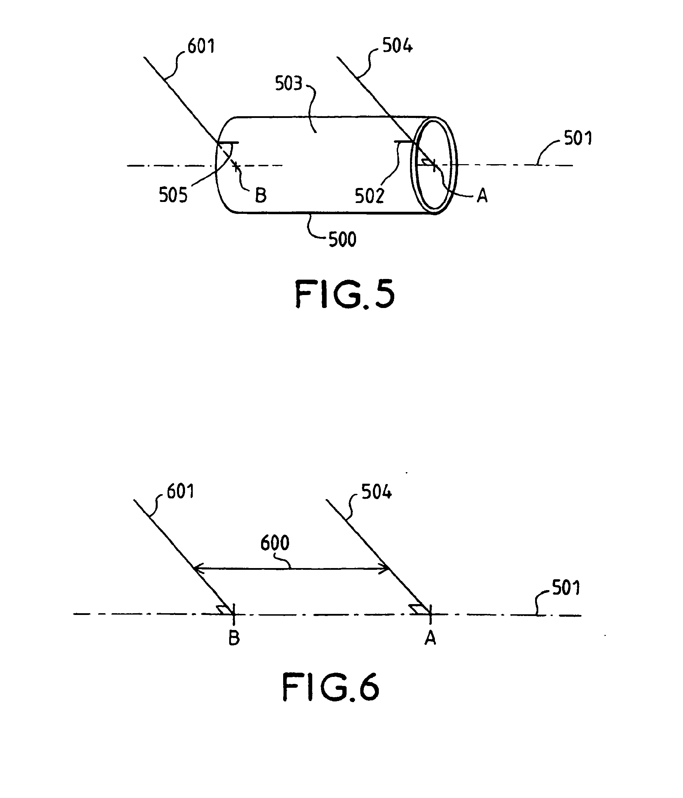

Fig. 5 shows an example of a tube 500 having a centre axis 501. The tube carries at a first extremity a first thread orientation mark 502, which may for example be carved in the surface of the outer tube wall 503. The thread orientation mark 502 is intended for later use by the thread manufacturer to indicate an orientation of a thread to be machined on the tube extremity, i.e., to indicate at which mark the machined thread should end. It is understood that the thread may be either one of a female or a male thread, and that the end of a female thread corresponds to the end of a male thread positioned therein at assembly.

It is possible to draw a half line 504 which is perpendicular to the centre axis 501. The half line 504 starts at a point A located at the first extremity of the tube 500 and intersects the wall 503 at the first thread orientation mark 502. The half line is shown here to determine a position of the first thread orientation mark 502 on the tube 500.

It will now be explained how a second thread orientation mark is generated at the other extremity of the tube 500.

Fig. 6 contains a representation of the centre axis 501 in which the tube 500 has not been drawn for reasons of readability. The first and the second extremity of the tube are represented by points A and B. The half line 504 is departs from A in a direction perpendicular to the centre axis 501. A translation of the half line 504 by a vector 600 having a direction parallel to the centre axis, being oriented from A to B and having a length corresponding to a distance separating A and B results in the half line 601. The latter departs from B and is perpendicular to the centre axis 501. It is obvious that no rotation angle around the centre axis 501 has occurred between the half lines 504 and 601.

Referring again to Fig. 5 the half line 601 obtained by translation of the half line 504, as explained in reference to Fig. 6, intersects the wall 503 at the second thread orientation mark 505. In a similar manner as for the mark 502, the thread orientation mark 505 is intended for later use by the thread manufacturer to indicate an orientation of a thread to be machined on the second tube extremity.

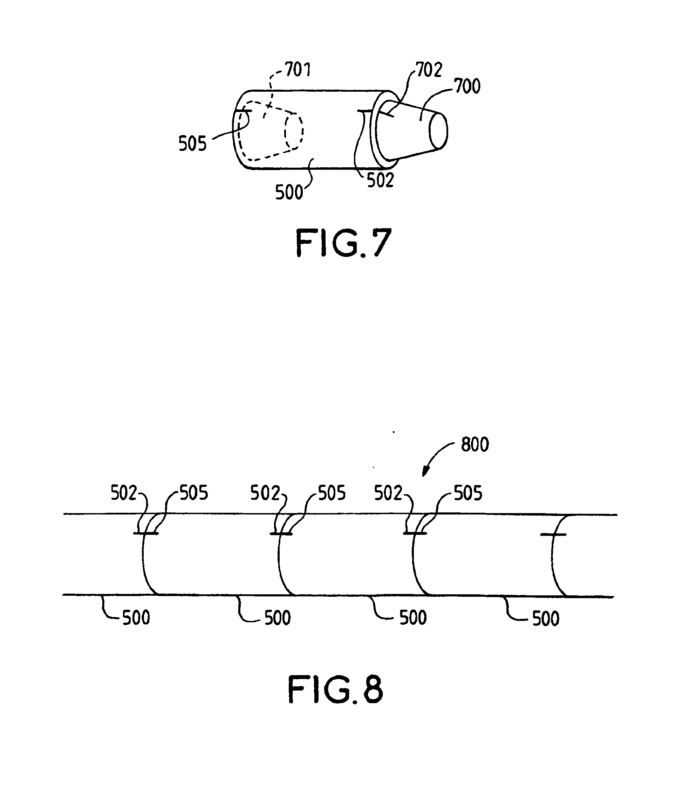

Fig. 7 shows the tube 500 onto which the thread manufacturer has machined a male thread 700 and a female thread 701 respectively at the first and second extremity. The threads 700 and 701 have been oriented according to the thread orientation marks 502 and 505 which were previously generated on the tube wall. For example, an end of the thread 700 is represented by a mark 702. The thread 700 is machined such that the mark 702 is positioned in front of the thread orientation mark 502.

Fig. 8 shows a tube assembly 800 of tubes 500 in which the respective male threads have been positioned in the respective female threads (not shown) by screwing the tubes 500 to each other. According to the invention all male and female threads have been machined and oriented using the thread orientation marks 502 and 505. Therefore for each tube its thread orientation mark 502 is positioned in front of the thread orientation mark 505 of the neighbouring tube.

Under the assumption that each tube 500 is perfectly straight, it is possible to connect all the thread orientation marks 502 and 505 on a straight line.

It has been shown that by generating thread orientation marks on a tube according to the invention before machining the threads on the extremities of the tubes, it becomes possible to assemble the threaded tubes in any order. When screwing one tube to another it is simply necessary to position the thread orientation marks located at the tube extremities in front of each other.

The thread orientation marks are generated before the machining of the threads. It is therefore possible to have the thread orientation marks generated on the tube by the tube manufacturer or by any other party processing the tubes before the machining.

In particular, the invention enables to precisely indicate how tubes of different shapes need to be threaded by the thread manufacturer, without requiring an assembly of the tubes by the thread manufacturer. Hence the thread manufacturing becomes less complex and cheaper.

Furthermore the thread manufacturer no more needs to perform adjustments on the machined threads to possibly adjust the position of 2 assembled tubes relatively to each other.

In practice, the tubes to be marked may not be perfectly cylindrical and/or straight. This is partially due to the length of the tube and to the difficulty of maintaining a perfect diameter over relatively long parts of tubes. The method of obtaining the first and second thread orientation mark as described in reference to Figs. 5 and 6 may equally be applied in case the diameter of the tube varies from one extremity to the other, or in case the tube is bend. This will now be explained.

It may happen that a diameter of a tube varies from the first extremity to the second extremity. Another effect which influences the wall shape of the tube and possibly its diameter is that the wall could be machined for example to accept a device mounted thereon or to receive a groove which may be used to protect cables running along the tube. The latter effect may in fact be encountered in a similar manner as a varying diameter when discussing the generation of the thread orientation marks at both extremities of the tube.

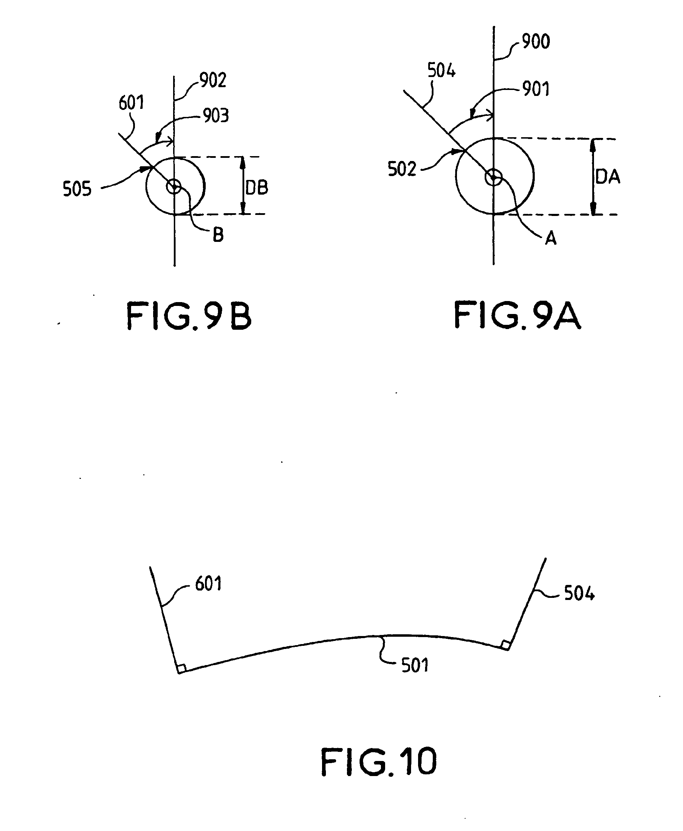

Figs. 9A and 9B schematically show cross-sections of the tube 500 at points A and B. This example illustrates an exaggerated difference of diameters DA and DB. The plane of the drawings is perpendicular to the centre axis 501 (not shown). It is assumed for the sake of clarity that the axis 501 is a straight line. A plane containing the centre axis 501 intersects the drawings respectively in lines 900 and 902. The line 900 forms an angle 901 with the half line 504. The line 902 in Fig. 9B is in the same plane as the line 900 in Fig. 9A. Since the translating operation used to obtain the half line 601 from the half line 504, as previously explained, is made according to a direction parallel to the centre axis 501 (not shown), i.e. perpendicular to the plane of the drawings, the same translating operation allows to obtain the line 902 from the line 900. Because a translating of two lines having a determined angle to each other results in two lines having the same determined angle to each other, the angle 903 between the half line 601 and the line 902 is the same as the angle 901 between the half line 504 and the line 900, independently of the varying diameter. Hence an azimuthal position of the first and second thread orienting marks remains the same from one extremity to the other of the tube independently of the diameter variations that may occur.

In case the tube is bent from one extremity to the other, it is to be understood that the translating of the half line 504 to the half line 601 occurs in a plurality of steps during which a translating vector remains parallel to the centre axis, i.e., tangent the centre axis whenever a curve is encountered. This assures that the half line remains perpendicular to the centre axis for each of the plurality of steps. As a result, in case the centre axis is bend, e.g., a portion of the centre axis located at the first extremity of the tube is not parallel with a portion of the centre axis located at the second extremity of the tube, the half line 601 is not parallel to the half line 504 despite the fact that both half lines are perpendicular to the centre axis. This is illustrated in Fig. 10.

An example of a method for generating the first and the second thread orientation marks on a tube will now be described in the following.

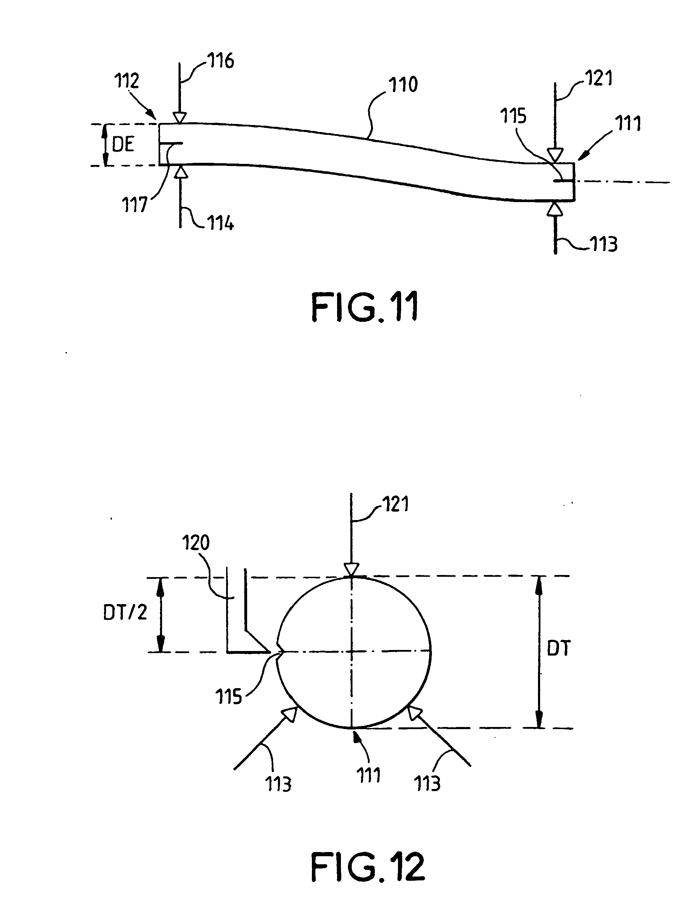

Fig. 11 shows an example side view of a tube 110 which lies at its extremities 111 and 112 on supports 113 and 114. The tube 110 carries a first thread orientation mark 115 which may be used as a reference to generate a second orientation mark.

Fig. 12 shows a schematic view of a cross section of the tube 110 at its extremity 111. In particular it can be seen how the tube lies on supports 113. The thread orientation mark 115 is realized as a carve in the tube wall. The tube will now be oriented by rotation around its centre axis while remaining on the supports 113. An outside diameter DT of the tube is measured in a vertical direction. A marking gauge 120 is then adjusted in height beside the tube such that a tip of the marking gauge is positioned at a periphery of the tube at a distance DT/2 from a maximum height of the tube. The tube is then rotated until the carve 115 is in front of the marking gauge's tip, i.e., the carve and the centre axis are in a horizontal plane perpendicular to the vertical direction. Finally, once the tube has been correctly rotated and oriented, it is fixed in this position using fixing means 121.

Referring again to Fig. 11, once the tube has been correctly rotated and oriented, it is also fixed in place on supports 114 with fixing means 116. An outside diameter DE is measured at the extremity 112 and a marking gauge (not shown) is adjusted in height beside the tube such that a tip of the marking gauge is positioned at the periphery of the tube at a distance DE/2 from a maximum height of the tube (similar as shown in Fig. 12). A second thread orientation mark 117 is carved in the tube wall at the position indicated by the marking gauge's tip.

In the present example, a fraction for adjusting the marking gauge tip in height beside the tube is chosen to be ½ of the diameter DT and DE respectively. Other fractions may well be used.

The tube carrying the two thread orientation marks 115 and 117 is ready to be machined by the thread manufacturer. The mark 115 may for example be used to orient a male thread to be machined on the extremity 111, while the mark 117 may be used to orient a female thread to be machined on the extremity 112.

The invention improves the process of preparing a tube assembly in that it allows to indicate in advance how the threads need to be machined on the tubes. A further improvement may be found in the fact that the tubes become interchangeable, i.e., the order of the tubes may be varied during assembling. No adjustment of relative orientation between tubes needs to be made by the thread manufacturer anymore. This allows to send different tubes of a same assembly and having thread orientation marks to different manufacturers, because each manufacturer may precisely position the machined thread using the thread orientation marks.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A tube (500) having a first (502) and a second (505) thread orientation mark at respectively a first and a second extremity, the marks being each used for orienting a thread machined in an axial direction of the tube, **characterised in that** the first and the second mark are positioned relatively to each other such that a half line perpendicular to the centre axis, departing from the centre axis (501, A) and passing through the first mark (504), when translated in a motion parallel to the centre axis towards the second extremity (600), at the second extremity departs from the centre axis (501, B) and passes through the second mark.

2. A tube according to claim 1, having oriented threads machined on each extremity, the oriented threads being oriented respectively by the thread orientation marks.

3. A tube according to claim 1 or 2, in which the first or the second thread orientation marks are used to adjust a further tube connected to respectively the first or second extremity, the further tube having a thread orientation mark which is positioned to correspond to the first or second thread orientation mark when the tubes are connected.

4. A method for marking a first orientation mark (115) and a second orientation mark (117) on a tube (110) at respectively a first extremity (111) and a second extremity (112) of the tube, the first orientation mark and the second orientation mark being used for orienting threads machined in a axial direction of the tube, comprising
■ marking the tube at the first extremity with the first orientation mark (115), and **characterised in** further comprising
■ determining a half line perpendicular to a centre axis of the tube, departing from the centre axis at the first extremity and passing through the first mark,
■ translating the half line from the first extremity to the second extremity in a motion parallel to the centre axis, and
■ marking the second orientation mark at an intersection of the translated half line and a wall of the tube.

5. A method for marking a first orientation mark (115) and a second orientation mark (117) on a tube (110) respectively at a first extremity (111) and a second extremity (112) of the tube, the first orientation mark and the second orientation mark being used for orienting threads machined in an axial direction of the tube, comprising
■ marking the tube at the first extremity with the first orientation mark and **characterised in** further comprising
■ determining an azimuthal angle of the first orientation mark with respect to a reference line perpendicularly intersecting a centre axis of the tube at the first extremity,
■ translating the reference line from the first extremity to the second extremity in a motion parallel to the centre axis, and
■ marking the second orientation mark at the second extremity at a position located on a wall of the tube at the azimuthal angle with respect to the translated reference line.

6. A method according to claim 5, further comprising
■ putting the tube on a support.

7. A method for marking a first orientation mark (115) and a second orientation mark (117) on a tube (110) respectively at a first extremity (111) and a second extremity (112) of the tube, the first orientation mark and the second orientation mark being used for orienting threads machined in an axial direction of the tube, **characterised in** comprising
■ fixing the tube on a support (113, 121, 114, 116),
■ measuring a first outside diameter (DT) of the tube at the first extremity in a vertical direction,
■ marking the first orientation mark at the first extremity at a location having a vertical position corresponding to a selected fraction of the first outside diameter from a maximum height of the tube at the first extremity,
■ measuring a second outside diameter (DE) of the tube at the second extremity in the vertical direction,
■ marking the second orientation mark at the second extremity at a location having a vertical position corresponding to the selected fraction of the second outside diameter from a maximum height of the tube at the second extremity.

8. The method according to claim 7, wherein the selected fraction is one half.

9. A tube assembly (800) comprising a plurality of tubes (500) according to either one of claim 1 or 2, in which the tubes are connected at their extremities by mounting the respective threads to each other and making the first thread orientation mark (502) of one tube correspond with the second thread orientation mark (505) of an adjacent tube.

## Patentansprüche

1. Rohr (500) mit einer ersten (502) und einer zweiten (505) Gewindeorientierungsmarkierung an einem ersten bzw. an einem zweiten Ende, wobei die Markierungen jeweils verwendet werden, um ein in einer axialen Richtung des Rohrs maschinell ausgebildetes Gewinde zu orientieren, **dadurch gekennzeichnet, dass** die erste und die zweite Markierung relativ zueinander so positioniert sind, dass ein Halbstrahl senkrecht zu der Mittelachse, der von der Mittelachse (501, A) abzweigt und durch die erste Markierung (504) verläuft, dann, wenn er parallel zu der Mittelachse zu dem zweiten Ende (600) translatorisch bewegt wird, am zweiten Ende von der Mittelachse (501, B) abzweigt und durch die zweite Markierung verläuft.

2. Rohr nach Anspruch 1, das orientierte Gewinde besitzt, die an jedem Ende maschinell ausgebildet sind, wobei die orientierten Gewinde jeweils durch die Gewindeorientierungsmarkierungen orientiert sind.

3. Rohr nach Anspruch 1 oder 2, bei dem die erste oder die zweite Gewindeorientierungsmarkierung verwendet wird, um ein weiteres Rohr, das mit dem ersten bzw. mit dem zweiten Ende verbunden wird, einzustellen, wobei das weitere Rohr eine Gewindeorientierungsmarkierung besitzt, die so positioniert ist, dass sie der ersten oder der zweiten Gewindeorientierungsmarkierung entspricht, wenn die Rohre verbunden sind.

4. Verfahren zum Markieren einer ersten Orientierungsmarkierung (115) und einer zweiten Orientierungsmarkierung (117) an einem Rohr (110) an einem ersten Ende (111) bzw. an einem zweiten Ende (112) des Rohrs, wobei die erste Orientierungsmarkierung und die zweite Orientierungsmarkierung verwendet werden, um Gewinde, die in einer axialen Richtung des Rohrs maschinell ausgebildet sind, zu orientieren, umfassend:
- Markieren des Rohrs an dem ersten Ende mit der ersten Orientierungsmarkierung (115) und **dadurch gekennzeichnet, dass** es ferner umfasst:
- Bestimmen eines Haibstrahls senkrecht zu einer Mittelachse des Rohrs, der von der Mittelachse an dem ersten Ende abzweigt und durch die erste Markierung verläuft,
- translatorisches Bewegen des Halbstrahls von dem ersten Ende zu dem zweiten Ende parallel zu der Mittelachse und
- Markieren der zweiten Orientierungsmarkierung an einem Schnittpunkt des translatorisch bewegten Halbstrahls und einer Wand des Rohrs.

5. Verfahren zum Markieren einer ersten Orientierungsmarkierung (115) und einer zweiten Orientierungsmarkierung (117) an einem Rohr (110) an einem ersten Ende (111) bzw. an einem zweiten Ende (112) des Rohrs, wobei die erste Orientierungsmarkierung und die zweite Orientierungsmarkierung verwendet werden, um Gewinde, die in einer axialen Richtung des Rohrs maschinell ausgebildet sind, zu orientieren, umfassend:
- Markieren des Rohrs an dem ersten Ende mit der ersten Orientierungsmarkierung und **dadurch gekennzeichnet, dass** es ferner umfasst:
- Bestimmen eines Azimutwinkels der ersten Orientierungsmarkierung in Bezug auf eine Referenzlinie, die eine Mittelachse des Rohrs an dem ersten Ende senkrecht schneidet,
- translatorisches Bewegen der Referenzlinie von dem ersten Ende zu dem zweiten Ende parallel zu der Mittelachse und
- Markieren der zweiten Orientierungsmarkierung an dem zweiten Ende an einer Position, die sich an einer Wand des Rohrs bei dem Azimutwinkel in Bezug auf die translatorisch bewegte Referenzlinie befindet.

6. Verfahren nach Anspruch 5, das ferner umfasst:
- Legen des Rohrs auf eine Unterstützung.

7. Verfahren zum Markieren einer ersten Orientierungsmarkierung (115) und einer zweiten Orientierungsmarkierung (117) an einem Rohr (110) an einem ersten Ende (111) bzw. an einem zweiten Ende (112) des Rohrs, wobei die erste Orientierungsmarkierung und die zweite Orientierungsmarkierung verwendet werden, um Gewinde, die in einer axialen Richtung des Rohrs maschinell ausgebildet sind, zu orientieren, **dadurch gekennzeichnet, dass** es umfasst:
- Befestigen des Rohrs an einer Unterstützung (113, 121, 114, 116),
- Messen eines ersten Außendurchmessers (DT) des Rohrs am ersten Ende in einer vertikalen Richtung,
- Markieren der ersten Orientierungsmarkierung an dem ersten Ende an einer Stelle mit einer einem ausgewählten Bruchteil des ersten Außendurchmessers entsprechenden vertikalen Position ausgehend von einer maximalen Höhe des Rohrs an dem ersten Ende,
- Messen eines zweiten Außendurchmessers (DE) des Rohrs an dem zweiten Ende in der vertikalen Richtung,
- Markieren der zweiten Orientierungsmarkierung an dem zweiten Ende an einer Stelle mit einer dem ausgewählten Bruchteil des zweiten Außendurchmessers entsprechenden vertikalen Position ausgehend von der maximalen Höhe des Rohrs an dem zweiten Ende.

8. Verfahren nach Anspruch 7, bei dem der ausgewählte Bruchteil eine Hälfte ist.

9. Rohrbaugruppe (800), die mehrere Rohre (500) nach einem der Ansprüche 1 oder 2 umfasst, wobei die Rohre an ihren Enden durch Anbringen der jeweiligen Gewinde aneinander und durch Herstellen einer Entsprechung zwischen der ersten Gewindeorientierungsmarkierung (502) eines Rohrs und der zweiten Gewindeorientierungsmarkierung (505) eines benachbarten Rohrs verbunden sind.

## Revendications

1. Tube (500) ayant une première (502) et une deuxième (505) marque d'orientation de filet à une première et une deuxième extrémité respectivement, ces marques étant chacune utilisées pour orienter un filet usiné dans une direction axiale du tube, **caractérisé en ce que** la première et la deuxième marque sont positionnées relativement l'une à l'autre de façon à ce qu'une demi-ligne perpendiculaire à l'axe central, partant depuis l'axe central (501, A) et passant à travers la première marque (504), lorsqu'elle est translatée dans un mouvement parallèle à l'axe central vers la deuxième extrémité (600), part de l'axe central (501, B) à la deuxième extrémité et passe à travers la deuxième marque.

2. Tube selon la revendication 1, ayant des filets orientés usinés sur chaque extrémité, ces filets orientés étant orientés respectivement par les marques d'orientation de filet.

3. Tube selon la revendication 1 ou 2, dans lequel la première ou la deuxième marque d'orientation de filet sont utilisées pour ajuster un autre tube raccordé à la première ou la deuxième extrémité respectivement, cet autre tube ayant une marque d'orientation de filet qui est positionnée de façon à correspondre à la première ou à la deuxième marque d'orientation de filet lorsque les tubes sont raccordés.

4. Procédé pour marquer une première marque d'orientation (115) et une deuxième marque d'orientation (117) sur un tube (110) à une première extrémité (111) et une deuxième extrémité (112) du tube respectivement, la première marque d'orientation et la deuxième marque d'orientation étant utilisées pour orienter les filets usinés dans une direction axiale du tube, comprenant
• le marquage du tube à la première extrémité avec la première marque d'orientation (115), et
**caractérisé en ce qu'**il comprend un outre
• la détermination d'une demi-ligne perpendiculaire à un axe central du tube, partant de l'axe central à la première extrémité et passant à travers la première marque,
• la translation de la demi-ligne de la première extrémité à la deuxième extrémité dans un mouvement parallèle à l'axe central, et
• le marquage de la deuxième marque d'orientation à une intersection de la demi-ligne translatée et d'une paroi du tube.

5. Procédé pour marquer une première marque d'orientation (115) et une deuxième marque d'orientation (117) sur un tube (110) à une première extrémité (111) et à une deuxième extrémité (112) du tube respectivement, la première marque d'orientation et la deuxième marque d'orientation étant utilisées pour orienter les filets usinés dans une direction axiale du tube, comprenant
• le marquage du tube à la première extrémité avec la première marque d'orientation, et
**caractérisé en ce qu'**il comprend un outre
• la détermination d'un angle azimuthal de la première marque d'orientation par rapport à une ligne de référence coupant perpendiculairement un axe central du tube à la première extrémité,
• la translation de cette ligne de référence de la première extrémité à la deuxième extrémité dans un mouvement parallèle à l'axe central, et
• le marquage de la deuxième marque d'orientation à la deuxième extrémité dans une position située sur une paroi du tube à l'angle azimuthal par rapport à la ligne de référence translatée.

6. Procédé selon la revendication 5, comprenant en outre
• la mise du tube sur un support.

7. Procédé pour marquer une première marque d'orientation (115) et une deuxième marque d'orientation (117) sur un tube (110) à une première extrémité (111) et à une deuxième extrémité (112) du tube respectivement, la première marque d'orientation et la deuxième marque d'orientation étant utilisées pour orienter les filets usinés dans une direction axiale du tube, **caractérisé en ce qu'**il comprend
• la fixation du tube sur un support (113, 121, 114, 116),
• la mesure d'un premier diamètre extérieur (DT) du tube à la première extrémité dans une direction verticale,
• le marquage de la première marque d'orientation à la première extrémité à un emplacement ayant une position verticale correspondant à une fraction sélectionnée du premier diamètre extérieur à partir d'une hauteur maximum du tube à la première extrémité,
• la mesure d'un deuxième diamètre extérieur (DE) du tube à la deuxième extrémité dans la direction verticale,
• le marquage de la deuxième marque d'orientation à la deuxième extrémité à un emplacement ayant une position verticale correspondant à la fraction sélectionnée du deuxième diamètre extérieur à partir d'une hauteur maximum du tube à la deuxième extrémité.

8. Le procédé selon la revendication 7, la fraction sélectionnée étant une moitié.

9. Ensemble de tubes (800) comprenant une pluralité de tubes (500) selon l'une ou l'autre des revendications 1 ou 2, les tubes étant raccordés à leurs extrémités en montant les filets respectifs l'un sur l'autre et en faisant la première marque d'orientation de filet (502) d'un tube correspondre à la deuxième marque d'orientation de filet (505) d'un tube adjacent.
